# EUROPÄISCHE PATENTANMELDUNG

(11) **EP 2 746 895 A2**
(43) Veröffentlichungstag der Anmeldung: **25.06.2014**
(21) Anmeldenummer: 13196503.0
(22) Anmeldetag: 10.12.2013
(51) Int. Cl.: G06F 1/16

(54) **Eingabesystem und Verfahren zu seiner Herstellung**

(30) Priorität: 21.12.2012 DE 102012224245
(71) Anmelder: Schilderfabrik Sommer GmbH, 71691 Freiberg/N. (DE)
(72) Erfinder: Theurer, Dirk, 71638 Ludwigsburg (DE)
(74) Vertreter: Patentanwälte Ruff, Wilhelm, Beier, Dauster & Partner

(57) **Zusammenfassung**

Eingabesystem und Verfahren zu seiner Herstellung.

Ein Eingabesystem für eine Funktionseinheit einer Maschine oder Industrieanlage mit einem Touchscreen, mit einem Rahmen, in den der Touchscreen eingelegt ist, sowie mit einer Blende, die den Touchscreen randseitig überdeckt und auf den Trägerrahmen aufgebracht ist, ist bekannt.

Erfindungsgemäß ist die Blende einteilig und eigenstabil aus einer Aluminiumplatte gestaltet, deren Oberfläche eloxiert ist.

Einsatz im Maschinen- und Anlagenbau.

## Beschreibung

Die Erfindung betrifft ein Eingabesystem für eine Funktionseinheit einer Maschine oder Industrieanlage mit einem Touchscreen, mit einem Rahmen, in den der Touchscreen eingelegt ist, sowie mit einer Blende, die den Touchscreen randseitig überdeckt und auf den Rahmen aufgebracht ist, sowie ein Verfahren zur Herstellung eines derartigen Eingabesystems.

Derartige Eingabesysteme sind als frontseitige Bedienpanels an Maschinen oder Anlagen für die Industrie allgemein bekannt. Ein derartiges Bedienpanel bildet ein Eingabesystem mit einem Touchscreen, der in einen formstabilen Rahmen eingebettet ist. Bei bekannten Eingabesystemen wird der Touchscreen von hinten her in den Rahmen eingesetzt. Anschließend wird von vorne her auf den Rahmen eine Blende aufgesetzt, die den Touchscreen randseitig überdeckt und Dekorfunktion hat. Die Blende besteht aus einer Kunststofffolie. Ein entsprechendes Dekor wird von einer Rückseite her auf die Kunststofffolie aufgebracht. Anschließend wird die Blende mit dieser Rückseite mit dem Rahmen verklebt.

Aufgabe der Erfindung ist es, ein Eingabesystem und ein Verfahren zu seiner Herstellung der eingangs genannten Art zu schaffen, die einen robusten Aufbau und eine einfache Herstellung ermöglichen.

Für das Eingabesystem wird diese Aufgabe durch die Merkmale des Anspruchs 1 gelöst. Danach ist die Blende einteilig und eigenstabil aus einem Aluminiumblech gestaltet, dessen Oberfläche eloxiert ist. Die Oberflächeneloxierung des Aluminiumblechs ermöglicht eine kratzfeste und demzufolge äußerst robuste Frontfläche für das Eingabesystem. Die Blende kann mittels eines Untereloxalverfahrens von einer Frontseite her bedruckt und demzufolge mit dem gewünschten Dekor versehen werden. Das Versehen mit dem gewünschten Dekor kann vor dem Aufbringen der Blende auf den Rahmen und/oder den Touchscreen erfolgen. Dadurch, dass die Blende aus dem Aluminiumblech eigenstabil hergestellt ist, kann die Blende einfach gehandhabt werden.

Erfindungsgemäß ist die Blende im Bereich ihrer die Frontseite des Eingabesystems bildenden Oberseite mit einem individuell gestaltbaren Dekor versehen, das beim Eloxieren der Oberfläche des Aluminiumblechs mittels eines Untereloxalverfahrens eingebracht wird. Dabei wird mittels eines Druckverfahrens ein individuelles Dekor in die offenen Poren des eloxierten Aluminiumblechs eingebracht. Anschließend wird das eloxierte Aluminium verdichtet und in Aluminiumhydroxid umgewandelt. Die aufgebrachten Farben und Farbpigmente des Dekors sind hierdurch eingeschlossen und werden durch die Aluminiumhydroxidschicht geschützt. Weitere Schutzschichten werden nicht benötigt. Dekore können alle Arten von Motiven, Logos, Texte und/oder Bilder und ähnliches sein.

In Ausgestaltung der Erfindung ist der Rahmen aus Aluminium hergestellt. Vorzugsweise ist eine Oberfläche des Rahmens eloxiert. Dadurch weisen die Blende und der Rahmen gleiche Materialien auf. Hierdurch wird eine gute Haptik und eine qualitativ hochwertige Optik erzielt. Dadurch, dass sowohl der Rahmen als auch die Blende im Bereich ihrer Oberfläche eloxiert sind, ergibt sich für die Oberfläche ein sehr hoher Härtegrad, der eine hervorragende Kratz- und Verschleißfestigkeit gewährleistet. Zudem ist eine Unempfindlichkeit gegen Chemikalien gegeben. Die Verwendung gleicher Materialien für die Blende und den Rahmen gewährleistet zudem gleiche Ausdehnungskoeffizienten, so dass die Blende bündig auf Stoß in den Rahmen eingepasst sein kann, ohne dass Temperaturunterschiede zu Spannungen oder sogar zu Verwerfungen oder Wellungen der Blende führen.

Erfindungsgemäß kann der Rahmen auch aus einem anderen Metall, insbesondere aus Edelstahl, oder auch aus Kunststoff hergestellt sein.

In weiterer Ausgestaltung der Erfindung ist die Blende mit einem Randbereich des Touchscreens und/oder dem Rahmen verklebt. Dadurch ist eine sichere Befestigung der Blende am Rahmen und/oder am Touchscreen erzielt.

In weiterer Ausgestaltung der Erfindung ist die Blende mittels einer ablösbaren Klebstoffschicht mit dem Touchscreen und/oder dem Rahmen verklebt. Dadurch ist es möglich, die Blende bei Bedarf zu entfernen und gegen eine andere Blende auszutauschen.

In weiterer Ausgestaltung der Erfindung ist der Rahmen mit einer Aussparung versehen, die derart auf Längen-, Breiten- und Dickenabmessungen der Blende abgestimmt ist, dass die Blende flächenbündig in die Aussparung eingepasst ist. Dadurch wird für eine Oberfläche des Eingabesystems ein durchgängiger und einheitlicher Eindruck vermittelt. Die Ablagerung von Schmutz an den Stoßstellen zwischen Blende und Aussparung kann hierdurch vermieden werden.

In weiterer Ausgestaltung der Erfindung sind Spaltmaße zwischen einem Außenrand der Blende und einem Rand der Aussparung kleiner als 95 µm, und eine Flächenbündigkeit der Oberflächen von Trägerrahmen und Blende liegt unter 100 µm. Dadurch wird für einen Benutzer des Eingabesystems der haptische Eindruck eines einteiligen Frontpanels erzielt.

In weiterer Ausgestaltung der Erfindung umfasst der Rahmen Befestigungsmittel, um das Eingabesystem frontseitig an einer Funktionseinheit einer Maschine oder einer Industrieanlage zu befestigen. Als Befestigungsmittel können in den Rahmen integrierte Schraubmittel vorgesehen sein, die vorzugsweise ein berührungsloses Einschrauben und Lösen durch Magnetwirkung ermöglichen.

In weiterer Ausgestaltung der Erfindung ist der Touchscreen mit dem Rahmen zu einer Vormontageeinheit verbunden, und es sind mehrere Blenden mit unterschiedlichen, in die eloxierte Oberfläche der Blende eingebrachten Dekors vorgesehen, die jeweils mit einer Klebstoffschicht zum Verkleben mit dem Rahmen und/oder dem Touchscreen versehen sind, wobei die Klebstoffschicht durch eine manuell abziehbare Deckfolie abgedeckt ist. Hierdurch ergibt sich für das Eingabesystem ein modularer Aufbau. Die Vormontageeinheit aus Touchscreen und Rahmen ist neutral. Durch entsprechendes Aufkleben einer durch ein passendes Dekor individualisierten Blende kann auch das Eingabesystem in entsprechender Weise individualisiert werden. Durch den modularen Aufbau ist eine einfache Lagerhaltung von Vormontageeinheiten einerseits und Blenden mit unterschiedlichen Dekors andererseits ermöglicht. Je nach Kundenwunsch werden eloxierte Aluminiumblenden mit individualisierten Dekors erzeugt und diese mit den einheitlichen Vormontageeinheiten verbunden, wodurch sich insgesamt für den Kunden individualisierte Eingabesysteme ergeben.

Für das Verfahren der eingangs genannten Art, wobei ein Touchscreen in einen Rahmen eingesetzt und mit diesem verklebt wird, wobei ein Randbereich des Touchscreens durch eine Blende verdeckt wird, die in den Rahmen eingepasst wird, wird die der Erfindung zugrundeliegende Aufgabe dadurch gelöst, dass die Blende aus einem eloxierten Aluminiumblech hergestellt und auf den Touchscreen aufgeklebt wird, bevor der Touchscreen in den Rahmen eingesetzt wird. Die erfindungsgemäße Lösung ermöglicht eine einfache Montage, da die formstabile Blende aus eloxiertem Aluminiumblech eine exakte Einpassung in die Aussparung des Rahmens ermöglicht, mit dem die Blende und der Touchscreen verbunden werden.

In Ausgestaltung des Verfahrens wird der Touchscreen in den Rahmen eingeklebt. Erfindungsgemäß ist es möglich, den Touchscreen lediglich dadurch mit dem Rahmen zu verbinden, dass die mit dem Touchscreen verklebte Blende mit dem Rahmen verklebt wird. Eine erhöhte Stabilität für die Befestigung des Touchscreens in dem Rahmen wird durch diese Ausgestaltung erreicht, indem zusätzlich auch noch der Touchscreen selbst in den Rahmen eingeklebt wird.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in einer Draufsicht eine Ausführungsform eines erfindungsgemäßen Eingabesystems unter Weglassung einer frontseitigen Blende,
- Fig. 2: die Blende für das Eingabesystem nach Fig. 1 und
- Fig. 3: in vergrößerter Darstellung einen Ausschnitt des Eingabesystems gemäß der Schnittlinie III-III in Fig. 1 unter Hinzufügung der Blende gemäß Fig. 2 in Explosionsdarstellung.

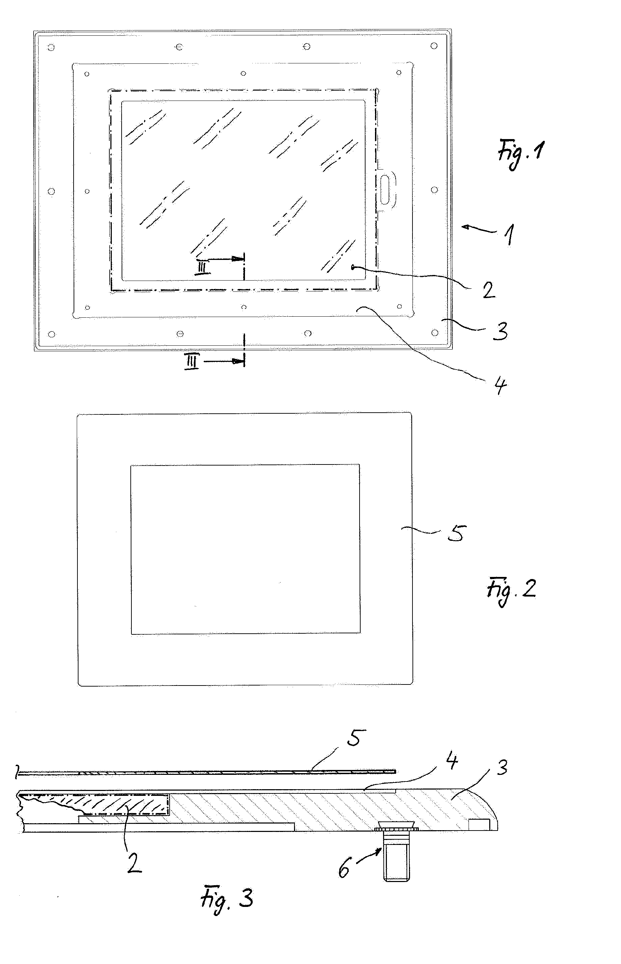

Ein Eingabesystem nach den Fig. 1 bis 3 ist für den Einsatz an einer Funktionseinheit einer Maschine oder Industrieanlage vorgesehen und dient als Bedienpanel für diese Maschine oder Industrieanlage. Als Funktionseinheit kann ein Bedienpult, ein Schaltschrank, eine Steuereinheit oder ähnliches der Maschine oder Industrieanlage vorgesehen sein.

Das Eingabesystem 1 gemäß den Fig. 1 bis 3 weist einen formstabilen, rechteckigen Rahmen 3 auf, der aus einem Aluminiumkörper hergestellt ist. Der Rahmen 3 weist eine Aufnahme für einen Touchscreen 2 auf, der anhand der Fig. 1 und 3 lediglich schematisch dargestellt ist. Der Touchscreen 2 ist in die Aufnahme des Rahmens 3 eingebettet und durch Verklebung mit der Aufnahme verbunden.

Im Bereich einer Oberseite ist der Rahmen 3 mit einer rechteckigen Aussparung versehen, die die Aufnahme für den Touchscreen 2 ringförmig umgibt. In die Aussparung 4 ist eine Blende 5 flächenbündig eingepasst, wobei eine Oberfläche der Blende 5 in ihrem in die Aussparung 4 eingepassten Montagezustand bündig mit einer Oberfläche des Rahmens 3 abschließt. Zudem sind die Außenabmessungen der Blende 5 derart auf einen rechteckig umlaufenden Rand der Aussparung 4 abgestimmt, dass sich in eingepasstem Zustand der Blende 5 zwischen dem umlaufenden Rand der Aussparung 4 und den Randkanten der Blende 5 Spaltmaße ergeben, die kleiner als 95 µm sind. Die Flächenbündigkeit zwischen der Oberfläche der Blende 5 und der Oberfläche des Rahmens 3 in eingesetztem Montagezustand der Blende 5 liegt in einem Toleranzbereich von weniger als 100 µm.

Die Blende 5 wird in die Aussparung 4 eingeklebt. Die Blende 5 ist derart rahmen- oder ringförmig gestaltet, dass sie innenseitig eine rechteckige Öffnung ergibt, deren Abmessungen geringer sind als korrespondierende Außenabmessungen einer Oberseite des Touchscreens 2. Die Blende 5 überdeckt in eingesetztem Montagezustand daher den Touchscreen 2 umlaufend randseitig. Die Blende 5 ist mit ihrer Unterseite zusätzlich zu der Verklebung mit einem Boden der Aussparung 4 auch mit den oberen Randflächen des Touchscreens 2 verklebt.

Die Blende 5 besteht aus einem einteiligen Aluminiumblech, dessen Oberfläche eloxiert ist. Die Oberfläche der Blende 5 ist zudem mittels eines Untereloxalverfahrens von einer Oberseite her mit einem Dekor versehen. Entsprechende Farben des Dekors werden während der Eloxierung der Oberfläche der Blende 5 in entsprechend offene Poren der eloxierten Oberfläche eingebracht. Anschließend erfolgt durch entsprechend chemische Behandlung ein Verschließen dieser Poren durch Umwandlung in eine Oxiddeckschicht. Das Dekor ist daher von der Oberseite auf die Blende 5 aufgebracht und durch die fertiggestellte Eloxation kratzfest versiegelt. Die Stärke der Blende 5 ist so bemessen, dass die Blende 5 eine Eigenstabilität besitzt, die eine einfache manuelle Handhabung oder eine Handhabung mittels eines Robotergreifers ermöglicht.

Der Rahmen 3 ist im Bereich seiner Unterseite mit Befestigungsmitteln 6 in Form von Schraubbolzen versehen, die mit korrespondierenden Schraubelementen an der nicht dargestellten Funktionseinheit zusammenwirken, um das Eingabesystem 1 an einer Frontseite der Funktionseinheit zu befestigen.

Die Blende 5 kann mittels einer lösbaren Klebstoffschicht in die Aussparung 4 eingepasst und mit dieser verklebt werden. Dies ermöglicht ein nachträgliches Entfernen der Blende 5 und einen Austausch gegen eine andere Blende 5.

Bei einem vorteilhaften Verfahren zur Herstellung des Eingabesystems 1 wird zunächst die Blende 5 aus einer geeigneten Aluminiumplatte hergestellt, deren Oberfläche eloxiert und in beschriebener Weise mit dem Dekor versehen wird. Vorteilhaft sind mehrere derartiger Blenden 5 mit unterschiedlichen Dekors gestaltet.

Der Rahmen 3 und der Touchscreen 2 werden zu einer Vormontageeinheit zusammengefügt. Alle Blenden 5 werden im Bereich ihrer Unterseite mit einer Klebstoffschicht versehen, die durch eine nicht klebende Deckfolie überdeckt ist. Dadurch können die verschiedenen Blenden 5 in Stapeln gelagert werden, ohne aneinander zu haften. Sobald nun eine Blende 5 ausgewählt wird, um in die Aussparung 4 des Rahmens 3 der Vormontageeinheit aus Rahmen 3 und Touchscreen 2 eingesetzt zu werden, wird in einfacher Weise die Deckfolie entfernt und die Blende 5 von oben her in die Aussparung 4 eingesetzt und auf den Boden der Aussparung 4 sowie auf den oberen Randbereich des Touchscreens 2 aufgepresst. Eine Oberfläche des Touchscreens 2 schließt flächenbündig mit dem Boden der Aussparung 4 ab.

Bei einer anderen vorteilhaften Ausführungsform ist der Touchscreen 2 von dem Rahmen 3 getrennt. In einem ersten Verfahrensschritt wird nach dem Herstellen der Blende 5 die Blende 5 auf den Randbereich der Oberfläche des Touchscreens 2 aufgeklebt. Die so gebildete Vormontageeinheit wird anschließend mit dem Rahmen verbunden, indem der Rahmen 3 von der Unterseite des Touchscreens 2 und der Blende 5 her angenähert wird. Die Blende 5 wird in die Aussparung 4 eingesetzt, während der Touchscreen 2 gleichzeitig in die Aufnahme des Rahmens 3 eingebettet wird. Entsprechende Klebstoffschichten schaffen in gleicher Weise eine feste Verbindung zwischen der Blende 5, dem Touchscreen 2 und dem Rahmen 3.

## Patentansprüche

1. Eingabesystem für eine Funktionseinheit einer Maschine oder Industrieanlage mit einem Touchscreen, mit einem Rahmen, in den der Touchscreen eingelegt ist, sowie mit einer Blende, die den Touchscreen randseitig überdeckt und auf den Rahmen aufgebracht ist, **dadurch gekennzeichnet, dass** die Blende (5) einteilig und eigenstabil aus einer Aluminiumplatte gestaltet ist, deren Oberfläche eloxiert ist.

2. Eingabesystem nach Anspruch 1, **dadurch gekennzeichnet, dass** der Rahmen (3) aus Aluminium hergestellt ist.

3. Eingabesystem nach Anspruch 2, **dadurch gekennzeichnet, dass** eine Oberfläche des Rahmens (3) eloxiert ist.

4. Eingabesystem nach Anspruch 1, **dadurch gekennzeichnet, dass** die Blende (5) mit einem Randbereich des Touchscreens (2) und/oder mit dem Rahmen (3) verklebt ist.

5. Eingabesystem nach Anspruch 4, **dadurch gekennzeichnet, dass** die Blende (5) mittels einer ablösbaren Klebstoffschicht mit dem Touchscreen (2) und/oder dem Rahmen (3) verklebt ist.

6. Eingabesystem nach Anspruch 1, **dadurch gekennzeichnet, dass** der Rahmen (3) mit einer Aussparung (4) versehen ist, die derart auf Längen-, Breiten- und Dickenabmessungen der Blende (5) abgestimmt ist, dass die Blende (5) flächenbündig in die Aussparung (4) eingepasst ist.

7. Eingabesystem nach Anspruch 6, **dadurch gekennzeichnet, dass** Spaltmaße zwischen einem Außenrand der Blende (5) und einem Rand der Aussparung (4) kleiner als 95 µm sind und eine Flächenbündigkeit der Oberflächen von Rahmen (3) und Blende (5) unter 100 µm liegt.

8. Eingabesystem nach einem der vorhergehenden Ansprüche, **dadurch gekennzeichnet, dass** der Rahmen (3) Befestigungsmittel (6) umfasst, um das Eingabesystem an einer Front einer Funktionseinheit zu befestigen.

9. Eingabesystem nach einem der vorhergehenden Ansprüche, **dadurch gekennzeichnet, dass** der Touchscreen (2) mit dem Rahmen (3) zu einer Vormontageeinheit verbunden ist, und dass mehrere Blenden (5) mit unterschiedlichen, in die eloxierte Oberfläche der Blende eingebrachten Dekors vorgesehen sind, die jeweils mit einer Klebstoffschicht zum Verkleben mit dem Rahmen (3) und/oder dem Touchscreen (2) versehen sind, wobei die Klebstoffschicht durch eine manuell abziehbare Deckfolie abgedeckt ist.

10. Verfahren zur Herstellung eines Eingabesystems nach einem der vorhergehenden Ansprüche, wobei ein Touchscreen in einen Rahmen eingesetzt und mit diesem verklebt wird, und wobei ein Randbereich des Touchscreens durch eine Blende verdeckt wird, die in den Rahmen eingepasst wird, **dadurch gekennzeichnet, dass** die Blende (5) aus einer eloxierten Aluminiumplatte hergestellt und auf den Touchscreen (2) aufgeklebt wird, bevor der Touchscreen (2) in den Rahmen (3) eingesetzt wird.

11. Verfahren nach Anspruch 10, **dadurch gekennzeichnet, dass** der Touchscreen (2) in den Rahmen (3) eingeklebt wird.
